(19) Europäisches Patentamt
European Patent Office
Office européen des brevets

(11) **EP 4 084 937 B1**

(12) **EUROPÄISCHE PATENTSCHRIFT**

(45) Veröffentlichungstag und Bekanntmachung des Hinweises auf die Patenterteilung:
**06.03.2024 Patentblatt 2024/10**

(21) Anmeldenummer: **20829872.9**

(22) Anmeldetag: **16.12.2020**

(51) Internationale Patentklassifikation (IPC):
**B25J 9/16** (2006.01)   **G05B 19/423** (2006.01)

(52) Gemeinsame Patentklassifikation (CPC):
**B25J 9/1656; B25J 9/1633; G05B 19/423;**
G05B 2219/36427; G05B 2219/36433;
G05B 2219/39226

(86) Internationale Anmeldenummer:
**PCT/EP2020/086324**

(87) Internationale Veröffentlichungsnummer:
**WO 2021/136658 (08.07.2021 Gazette 2021/27)**

(54) **BEWEGEN EINER ROBOTERFESTEN REFERENZ**

MOVING A REFERENCE FIXED ON A ROBOT

DÉPLACEMENT D'UNE RÉFÉRENCE FIXÉE À UN ROBOT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.12.2019 DE 102019220619**

(43) Veröffentlichungstag der Anmeldung:
**09.11.2022 Patentblatt 2022/45**

(73) Patentinhaber: **KUKA Deutschland GmbH 86165 Augsburg (DE)**

(72) Erfinder:
• **MUNOZ OSORIO, Juan, David 86152 Augsburg (DE)**
• **ALLMENDINGER, Felix 86163 Augsburg (DE)**

(74) Vertreter: **Oelke, Jochen KUKA Aktiengesellschaft Zugspitzstraße 140 86165 Augsburg (DE)**

(56) Entgegenhaltungen:
EP-A1- 3 352 951          WO-A1-2019/219795
DE-B3-102018 207 919

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 084 937 B1

**Beschreibung**

Die vorliegende Erfindung betrifft ein Verfahren zum Bewegen einer roboterfesten Referenz, insbesondere eines Endeffektors, eines Roboters, insbesondere mehrachsigen Roboterarms, sowie ein System und Computerprogrammprodukt zur Durchführung des Verfahrens.

Aus der DE 10 2015 118 918 B3 ist ein Verfahren zum Steuern eines Roboters bekannt, bei dem Aktoren derart angesteuert werden, dass ein Strukturelement auf einen nächstliegenden Gitterpunkt eines 3D-Gitters bewegt wird und an diesem verbleibt, falls ein Betrag einer am Strukturelement vermittelten Eingabekraft kleiner als der Betrag einer Kraft ist, die von der aktuellen Position des Strukturelements im 3D-Gitter abhängt.

Dadurch erfährt ein Bediener beim Handführen des Roboters entlang des Gitters alternierend einen Widerstand, wenn das Strukturelement sich von einem (noch) nächstliegenden Gitterpunkt fortbewegt, und eine Anziehung zu einem neuen Gitterpunkt, sobald das Strukturelement sich diesem neuen Gitterpunkt ausreichend genähert hat.

Die DE 102018207919 B3 betrifft ein Verfahren zum Steuern eines Roboters, wobei die Antriebe des Roboters zum Anfahren wenigstens eines vorgegebenen Ziel-Punktes in einem Aufgabenraum des Roboters kommandiert werden. Ein momentaner Ziel-Punkt wird in dem Verfahren nur verändert, falls eine Soll-Rückführgeschwindigkeit zu dem anzufahrenden Ziel-Punkt im Aufgabenraum für einen ersten Schleppfehler zu dem Ziel-Punkt auf einen größeren Betrag begrenzt wird als für einen zweiten Schleppfehler, der größer als der erste Schleppfehler ist.

Die EP 3 352 951 A1 betrifft ein Robotersystem zum Handführen durch einen Benutzer, aufweisend einen Endeffektor und einen Kraftsensor zur Erfassung einer Kraft, die durch den Benutzer auf den Endeffektor wirkt. Wenn der Endeffektor während des Handführens durch den Benutzer auf einer Bewegungstrajektorie bewegt wird, die von der Referenztrajektorie abweicht, kann durch das System ein Rückstellmoment als Kraft-Rückkopplungssignal aufgeprägt werden, wobei das Kraft-Rückkopplungssignal proportional zur Abweichung der beiden Bahnen und einem voreinstellbaren Parameter sein kann.

Aufgabe der vorliegenden Erfindung ist es, das Bewegen einer roboterfesten Referenz zu verbessern.

Diese Aufgabe wird durch ein Verfahren mit den Merkmalen des Anspruchs 1 gelöst. Ansprüche 5, 6 stellen ein System bzw. Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung sind, insbesondere werden, eine Anzahl, in einer Ausführung eine, insbesondere geordnete, Abfolge bzw. Reihe, diskreter zulässiger Posen $x_{d,\,i}$ einer roboterfesten Referenz eines Roboters vorgegeben:

$$\{x_{d,\,1},\ x_{d,\,2},\ \ldots,\ x_{d,\,i},\ \ldots,\ x_{d,\,N}\}$$

Der Roboter weist in einer Ausführung einen (mehrachsigen) Roboterarm und/oder bzw. mit wenigstens drei, in einer Ausführung wenigstens sechs, insbesondere wenigstens sieben, Achsen bzw. Gelenke(n), insbesondere Drehachsen bzw. - gelenke(n), auf, kann insbesondere ein solcher sein.

Die roboterfeste Referenz ist in einer Ausführung ortsfest bezüglich eines Strukturelements, vorzugsweise eines Endeffektors, des Roboter(arm)s, kann insbesondere ein(en) Endeffektor bzw. TCP des Roboter(arm)s aufweisen, insbesondere sein.

Eine Pose x im Sinne der vorliegenden Erfindung weist in einer Ausführung eine ein-, zwei- oder dreidimensionale, insbesondere kartesische, Position der Referenz, insbesondere im Anschauungs- bzw. Arbeitsraum (des Roboters) und/oder eine ein-, zwei- oder dreidimensionale, Orientierung der Referenz, insbesondere im Anschauungs- bzw. Arbeitsraum auf, beispielsweise also

$$x = [x,\ y]^{\mathsf{T}}\ \text{oder}\ [x,\ y,\ z]^{\mathsf{T}}\ \text{oder}\ [x,\ y,\ z,\ \alpha,\ \beta,\ \gamma]^{\mathsf{T}}$$

oder dergleichen mit Ortskoordinaten $x,\ y,\ z$, insbesondere in einem umgebungs- oder roboterfesten Referenzsystem und Verdrehungen, insbesondere Euler- oder Kardan-Winkel, gegenüber einem bzw. dem umgebungs- oder roboterfesten Referenzsystem, kann insbesondere eine solche ein-, zwei- oder dreidimensionale Position und/oder Orientierung sein.

Nach einer Ausführung der vorliegenden Erfindung weist ein Verfahren zum Bewegen der roboterfesten Referenz auf Basis der vorgegebenen diskreten zulässigen Posen den, in einer Ausführung mehrfach wiederholten, Schritt auf:

- Ausüben von Antriebskräften auf den Roboter durch dessen Antriebe, in einer Ausführung Motoren, insbesondere Elektromotoren, um die Referenz derart zu bewegen, dass sie einer auf den Roboter, in einer Ausführung die Referenz, ausgeübten Handführkraft folgt bzw. zu folgen versucht,

wobei die Antriebskräfte auf Basis bzw. in Abhängigkeit bzw. unter Berücksichtigung von einer Differenz $\Delta$ zwischen einer (jeweils) aktuellen Pose $x(t)$ der Referenz und einer ihr (jeweils) nächst(liegend)en Pose von den zulässigen Posen, die vorliegend ohne Beschränkung der Allgemeinheit (jeweils) als erste Pose bezeichnet wird, derart bzw. mit der Maßgabe ausgeübt, insbesondere ermittelt, werden, dass die Antriebskräfte bei bzw. im Falle einer Abweichung zwischen der (jeweiligen) aktuellen Pose und der (jeweiligen) ersten Pose eine von der Differenz abhängige Rückführkraft auf die Referenz bewirken bzw. an der Referenz vermitteln.

Hierdurch wird in einer Ausführung vorteilhaft eine (nachgiebige) Zwangsführung entlang der Anzahl bzw. Abfolge diskreter zulässiger Posen bei einer Handführung der roboterfesten Referenz realisiert.

Eine Kraft im Sinne der vorliegenden Erfindung kann eine oder mehrere Dimensionen bzw. Komponenten aufweisen. Vorliegend wird zur kompakteren Darstellung auch ein antiparalleles Kräftepaar bzw. Drehmoment verallgemeinernd als Kraft im Sinne der vorliegenden Erfindung bezeichnet. Somit kann jeweils, wenn vorliegend von (irgendeiner) Kraft die Rede ist, diese auch immer ein ein- oder mehrdimensionales Drehmoment aufweisen, insbesondere sein.

Nach einer Ausführung der vorliegenden Erfindung entspricht die Rückführkraft einer von der Differenz abhängigen Rückstellkraft $f_c$ von der aktuellen Pose zu der ersten Pose, wobei die Rückstellkraft-Komponente in Richtung einer Verbindung zwischen der (jeweiligen) ersten Pose und einer ihr (jeweils) benachbarten Pose der zulässigen Posen, die vorliegend ohne Beschränkung der Allgemeinheit (jeweils) als zweite Pose bezeichnet wird, ausgeblendet ist bzw. wird, so dass die Komponente einer von den Antriebskräften an der Referenz bewirkten bzw. vermittelten Gesamtkraft in Richtung der Verbindung von der Differenz $\Delta$ unabhängig ist.

Hierdurch kann in einer Ausführung ein ruckartiges Bewegen infolge des Widerstands (wenn die Referenz sich von einer ersten Pose fortbewegt) und der damit alternierenden Anziehung (zu einer neuen ersten Pose, sobald die Referenz sich dieser ausreichend genähert hat) reduziert, bevorzugt vermieden, und dadurch das Bewegen der roboterfesten Referenz verbessert werden.

Zusätzlich zu diesem Aspekt ist nach einer Ausführung der vorliegenden Erfindung wenigstens ein Anteil der Antriebskräfte von Geschwindigkeiten der Antriebe und/oder einer Geschwindigkeit der Referenz, in einer Ausführung linear, abhängig, insbesondere (als) ein dämpfender bzw. den Geschwindigkeiten entgegenwirkender Dämpfungsanteil der Antriebskräfte.

Hierdurch kann in einer Ausführung ein ruckartiges Bewegen infolge des Widerstands (wenn die Referenz sich von einer ersten Pose fortbewegt) und der damit alternierenden Anziehung (zu einer neuen ersten Pose, sobald die Referenz sich dieser ausreichend genähert hat) reduziert, bevorzugt vermieden, und/oder eine Stabilität erhöht und dadurch das Bewegen der roboterfesten Referenz (weiter) verbessert werden.

In einer Ausführung ist die Rückstellkraft $f_c$ von der Differenz, in einer Weiterbildung linear, abhängig und/oder reduziert die Differenz bzw. versucht die Differenz zu reduzieren, ist in einer Ausführung von der aktuellen Pose zu der ersten Pose gerichtet:

$$f_c = f_c(\Delta);\ \Delta = x_{d,\,i} - x(t),\ \text{insbesondere } f_c = k \cdot \Delta \text{ mit } k \in \Re^+.$$

Entsprechend sind in einer Ausführung die nicht ausgeblendeten Komponenten der Rückstellkraft $f_c$, die der Rückführkraft entsprechen, von der Differenz, in einer Weiterbildung linear, abhängig und/oder reduziert die Rückführkraft die entsprechend nicht ausgeblendeten Komponenten der Differenz bzw. versucht die nicht ausgeblendeten Komponenten der Differenz zu reduzieren, ist in einer Ausführung von der aktuellen Pose senkrecht zu der Verbindung gerichtet bzw. komplementär zu der Verbindung bzw. in einem Komplementär(unter)raum zum (Unter)Raum der Verbindung.

Zusätzlich ist die Rückstellkraft $f_c$ in einer Ausführung von einer, insbesondere aktuellen, Geschwindigkeit dx/dt der Referenz, in einer Weiterbildung linear, abhängig und/oder reduziert diese Geschwindigkeit bzw. versucht diese Geschwindigkeit zu reduzieren, ist in einer Ausführung dieser Geschwindigkeit entgegen gerichtet bzw. gegensinnig zu dieser Geschwindigkeit:

$$f_c = f_c(\Delta, dx/dt);\ \Delta = x_{d,\,i} - x(t),\ \text{insbesondere } f_c = k \cdot \Delta + D \cdot dx/dt \text{ mit } k \in \Re^+,\ D \le 0.$$

Entsprechend sind in einer Ausführung die nicht ausgeblendeten Komponenten der Rückstellkraft $f_c$, die der Rückführkraft entsprechen, von einer Geschwindigkeit der Referenz, in einer Weiterbildung linear, abhängig und/oder reduziert die Rückführkraft die entsprechend nicht ausgeblendeten Komponenten der Geschwindigkeit der Referenz bzw. versucht die nicht ausgeblendeten Komponenten der Geschwindigkeit der Referenz zu reduzieren.

In einer Ausführung sind bzw. werden die zulässigen Posen, in einer Ausführung vorab, auf Basis einer erfassten realen Umgebung vorgegeben, beispielsweise einer (realen) Umgebungsoberfläche, auf der sich die Referenz bewegen soll oder dergleichen.

In einer Ausführung sind bzw. werden die zulässigen Posen, in einer Ausführung vorab, auf Basis eines mathematischen Modells einer Umgebung vorgegeben, beispielsweise einer (virtuellen) Umgebungsoberfläche, auf der sich die Referenz bewegen soll oder dergleichen.

Hierdurch kann in einer Ausführung jeweils das Bewegen der roboterfesten Referenz in einer Umgebung verbessert werden.

In einer Ausführung sind bzw. werden die zulässigen Posen, in einer Ausführung vorab, mithilfe eines mathematischen, insbesondere kinematischen oder dynamischen, Modells des Roboters vorgegeben.

Hierdurch kann in einer Ausführung eine Kinematik bzw. Dynamik des Roboters vorteilhaft berücksichtigt und dadurch das Bewegen der roboterfesten Referenz (weiter) verbessert werden.

In einer Ausführung sind bzw. werden die zulässigen Posen, in einer Ausführung vorab, mithilfe des (realen) Roboters vorgegeben, in einer Weiterbildung durch Anfahren der Posen und/oder bzw. mithilfe eine(r) Handführung des Roboters bzw. Ausüben einer Handführkraft auf den Roboter, insbesondere die roboterfeste Referenz.

Die Antriebe werden mittels Operational Space Control gesteuert.

Die Operational Space Control, die beispielsweise aus O. Khatib, "A Unified Approach for Motion and Force Control of Robot Manipulators: The Operational Space Control Formulation", IEEE, Journal on Robotics and Automation, Februar 1987, Vol. RA-3, No. 1, 43-53, bekannt ist, eignet sich aufgrund der darin verwendeten Jacobimatrizen besonders gut zum Ausblenden von Kraftkomponenten, da dies dort durch Nullbelegung bzw. Streichen der entsprechenden Zeilen der entsprechenden Jacobimatrizen bzw. Posen realisiert werden kann, die hierzu zu der Verbindung zwischen der ersten und zweiten Pose ausgerichtet wird bzw. ist. Außerdem eignet sich dieses Verfahren aufgrund der einfachen Formulierung einer Dämpfung im Achsraum besonders gut zur Realisierung einer von Geschwindigkeiten der Antriebe abhängigen Gesamtkraft an der Referenz.

Nach einer Ausführung der vorliegenden Erfindung ist ein System zum Bewegen der roboterfesten Referenz des Roboters auf Basis der Anzahl vorgegebener diskreter zulässiger Posen, insbesondere hard- und/oder software-, insbesondere programmtechnisch, zur Durchführung eines hier beschriebenen Verfahrens eingerichtet und/oder weist auf:

- Mittel zum Ausüben von Antriebskräften auf den Roboter durch dessen Antriebe zum Bewegen der Referenz zum Folgen einer auf den Roboter ausgeübten Handführkraft auf Basis einer Differenz zwischen einer aktuellen Pose ($x(t)$) der Referenz und einer ihr nächsten, ersten Pose der zulässigen Posen derart, dass die Antriebskräfte bei einer Abweichung zwischen der aktuellen Pose und der ersten Pose eine von der Differenz abhängige Rückführkraft auf die Referenz bewirken,

wobei die Rückführkraft einer von der Differenz abhängigen Rückstellkraft von der aktuellen Pose zu der ersten Pose entspricht, deren Komponente in Richtung einer Verbindung zwischen der ersten Pose und einer ihr benachbarten zweiten Pose der zulässigen Posen ausgeblendet ist, so dass die Komponente einer von den Antriebskräften an der Referenz bewirkten Gesamtkraft in Richtung der Verbindung von der Differenz unabhängig ist sowie Mittel zum Steuern, insbesondere Regeln, der Antriebe mittels Operational Space Control.

In einer Ausführung weist das System bzw. sein(e) Mittel auf:

- Mittel zum Vorgeben der zulässigen Posen, insbesondere vorab und/oder auf Basis einer erfassten Umgebung und/oder eines mathematischen Modells einer Umgebung und/oder mithilfe eines mathematischen Modells des Roboters und/oder, insbesondere durch eine Handführung des Roboters, mithilfe des Roboters.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU), Graphikkarte (GPU) oder dergleichen, und/oder ein oder mehrere Programme oder Programmmodule aufweisen. Die Verarbeitungseinheit kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die Verarbeitungseinheit die Schritte solcher Verfahren ausführen kann und damit insbesondere den Roboter bzw. dessen Antriebe steuern, insbesondere regeln, kann. Ein Computerprogrammprodukt kann in einer Ausführung ein, insbesondere nicht-flüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch das System bzw. sein(e) Mittel.

In einer Ausführung weist das System den Roboter auf.

Antriebskraftanteile zum Folgen einer auf den Roboter ausgeübten Handführkraft können in einer Ausführung, insbesondere in an sich bekannter Weise, ermittelt und zu den Antriebskraftanteilen zum Bewirken bzw. Vermitteln der Rückführkraft und/oder den Antriebskraftanteilen zum Bewirken bzw. Vermitteln einer von Geschwindigkeiten der Antriebe, insbesondere linear, abhängigen Gesamt- bzw. Dämpfungskraft hinzuaddiert bzw. diesen überlagert werden.

Beispielsweise kann aus der Differenz zwischen Achskräften, die auf Basis eines mathematischen Modells des Roboters ermittelt werden, und tatsächlich erfassten Achskräften eine auf den Roboter ausgeübte Handführkraft ermittelt werden. Gleichermaßen kann eine solche Handführkraft auch beispielsweise durch einen Sensor an einem Handführflansch bzw. -griff am Roboter, insbesondere Endeffektor, ermittelt werden.

Antriebskraftanteile zum Folgen der so oder anders ermittelten Handführkraft können in einer Ausführung durch eine entsprechende Kraftregelung ermittelt und durch die Antriebe realisiert werden, wobei insbesondere die Operational Space Control sich besonders zur Realisierung einer Handführung eignet. Insbesondere kann auf Basis der ermittelten Handführkraft eine Soll-Position, Soll-Geschwindigkeit und/oder Soll-Beschleunigung der roboterfesten Referenz ermittelt und diese durch eine entsprechende Regelung bzw. entsprechende Antriebskraftanteile und/oder mittels Operational Space Control umgesetzt bzw. die Antriebe hierzu bzw. entsprechend angesteuert werden. Eine Handführung bzw. ein Folgen einer auf den Roboter ausgeübten Handführkraft bzw. entsprechende Antriebskraftanteile können in einer Ausführung durch eine Gravitationskompensation, eine weiche bzw. nachgiebige Positionsregelung zum Halten der jeweils aktuellen Stellung, eine entsprechende Impedanz- bzw. Admittanzregelung oder dergleichen realisiert sein bzw. werden.

Ein Steuern im Sinne der vorliegenden Erfindung kann insbesondere ein Regeln umfassen.

Weitere Vorteile und Merkmale ergeben sich aus den Unteransprüchen und den Ausführungsbeispielen. Hierzu zeigt, teilweise schematisiert:

Fig. 1: ein System zum Bewegen einer roboterfesten Referenz eines Roboters nach einer Ausführung der vorliegenden Erfindung; und

Fig. 2: ein Verfahren zum Bewegen der Referenz nach einer Ausführung der vorliegenden Erfindung.

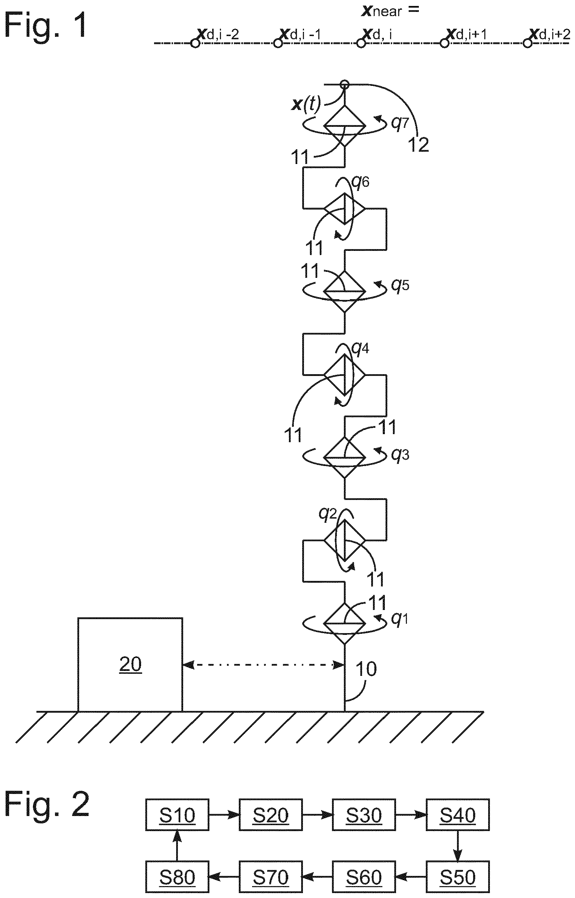

Fig. 1 zeigt ein System zum Bewegen eines einer roboterfesten Referenz in Form eines Endeffektors bzw. TCPs 12 eines Roboters in Form eines mehrachsigen Roboterarms 10, der im Ausführungsbeispiel sieben Drehachsen, deren Koordinaten bzw. (Winkel)Stellungen mit $q = q_1, ..., q_7$ bezeichnet sind, und Antriebe 11 zum Bewegen bzw. Verstellen dieser Drehachsen aufweist, die durch eine Robotersteuerung 20 gesteuert, insbesondere geregelt, werden, welche ein nachfolgend beschriebenes Verfahren zum Bewegen der Referenz 12 nach einer Ausführung der vorliegenden Erfindung durchführt bzw. hierzu eingerichtet ist.

Für den Endeffektor 12 sind eine Reihe bzw. Abfolge von diskreten zulässigen Posen

$$\ldots, \boldsymbol{x}_{d,i-2}, \boldsymbol{x}_{d,i-1}, \boldsymbol{x}_{d,i}, \boldsymbol{x}_{d,i+1}, \boldsymbol{x}_{d,i+2}, \ldots$$

vorgegeben, die im Ausführungsbeispiel jeweils eine dreidimensionale kartesische Position $[x, y, z]^T$ des Endeffektors im Anschauungs- bzw. Arbeitsraum des Roboters 10 bezeichnen. Dies ist ein besonders vorteilhafter Anwendungsfall, ohne dass die Erfindung hierauf beschränkt wäre. Gleichermaßen kann beispielsweise eine Pose auch nur jeweils eine zweidimensionale Position $[x, y]^T$ oder zusätzlich oder alternativ eine Orientierung des Endeffektors sein.

Mit $\boldsymbol{x}(t)$ ist die entsprechende aktuelle Pose des Endeffektors 12 angedeutet, wobei in Fig. 1 die Pose $\boldsymbol{x}_{d,i}$ die dieser aktuellen Pose nächste bzw. erste Pose $\boldsymbol{x}_{near}$ der zulässigen Posen darstellt. Mit d$\boldsymbol{x}$/d$t$ wird hier die aktuelle Geschwindigkeit des Endeffektors 12 bzw. dessen nach der Zeit differenzierte aktuelle Pose bezeichnet.

$\boldsymbol{f}_c = k \cdot (\Delta)$ beschreibt bzw. definiert eine von der Differenz $\Delta = \boldsymbol{x}_{near} - \boldsymbol{x}(t)$ linear abhängige Rückstellkraft von der aktuellen Pose $\boldsymbol{x}(t)$ zu der ersten Pose $\boldsymbol{x}_{near}$, $\boldsymbol{f}_c = k \cdot (\Delta) + D \cdot d\boldsymbol{x}/dt$ eine Rückstellkraft, die zusätzlich auch von der aktuellen Geschwindigkeit linear abhängig ist.

Mit dem mathematischen bzw. dynamischen Modell

$$\boldsymbol{T} = \boldsymbol{M}(\boldsymbol{q}) \cdot d^2\boldsymbol{q}/dt^2 + \boldsymbol{c}(\boldsymbol{q}, d\boldsymbol{q}/dt) + \boldsymbol{g}(\boldsymbol{q})$$

mit den Antriebs- bzw. Achskräften bzw. -drehmomenten $\boldsymbol{T}$ und der Massenmatrix $\boldsymbol{M}$ im Achsraum sowie den Termen $\boldsymbol{c}$, $\boldsymbol{g}$, die rein stellungsabhängige Kräfte ($\boldsymbol{g}(\boldsymbol{q})$) wie beispielsweise Gewichtskräfte bzw. geschwindigkeits- und gegebenenfalls stellungsabhängige Kräfte ($c(q$, d$q$/d$t$)) wie beispielsweise Reibungs- oder Fliehkräfte beschreiben, kann die Rückstellkraft zusammen mit einer Dämpfungskraft im Rahmen einer Operational Space Control auf entsprechende Antriebskräfte bzw. Antriebskraftanteile abgebildet werden:

$$T_c = J^T(\Lambda\,(x)\cdot f_c + \mu(x, \mathrm{d}x/\mathrm{d}t) + p(x)) + N\cdot(M\cdot k_d\cdot \mathrm{d}q/\mathrm{d}t + c + g)$$

mit der Dämpfung $k_d \leq 0$, dem Nullraumprojektor $N = 1 - J^T\cdot(J^{\#})^T$, der Massenmatrix im Operational Space $\Lambda = (J\cdot M^{-1}\cdot J^T)^{-1}$, den Termen $\mu = (J^{\#})^T\cdot c - \Lambda\cdot \mathrm{d}J/\mathrm{d}t\cdot \mathrm{d}q/\mathrm{d}t$ und $p = (J^{\#})^T\cdot g$ sowie der Matrix $J^{\#} = M^{-1}\cdot J^T\cdot \Lambda$ und der Jacobimatrix $J$. Zu weiteren Details wird ergänzend auf die Fachliteratur zur Operational Space Control und insbesondere den vorstehend genannten Aufsatz von Khatib sowie DE 10 2018 207 921 B3 und DE 10 2018 207 919 B3 Bezug genommen.

Die Jacobimatrix $J$ vermittelt dabei die Transformation zwischen dem Achsraum bzw. den Achskoordinaten bzw. (Winkel)Stellungen $q$ und dem Anschauungs- bzw. Arbeitsraum des Roboters, in dem die Posen $x$ beschrieben sind bzw. werden:

$$\mathrm{d}q/\mathrm{d}t = J^T\cdot \mathrm{d}x/\mathrm{d}t,$$

wobei das Koordinaten- bzw. Referenzsystem dieses Anschauungs- bzw. Arbeitsraums so orientiert ist bzw. wird, dass eine seiner Achsen, im Ausführungsbeispiel die z-Achse, parallel zu der Verbindung ($x_{d,i+1} - x_{d,i}$) ist. Auch die Posen bzw. Rückstellkraft $f_c$ werden in diesem Koordinaten- bzw. Referenzsystem beschrieben.

Indem man in dieser Jacobimatrix $J$ und den Posen die entsprechende, im Ausführungsbeispiel dritte bzw. z-Zeile mit Nullen belegt bzw. streicht, wird die Komponente der Rückstellkraft $f_c$ in Richtung der Verbindung ($x_{d,i+1} - x_{d,i}$) bzw. in z-Richtung des Koordinaten- bzw. Referenzsystems auf einfache Weise ausgeblendet, so dass der Bediener den Endeffektor 12 in dieser Richtung frei führen kann, ohne einen Widerstand bzw. eine Anziehung zu spüren, die von der Differenz zwischen der aktuellen Pose $x(t)$ und der ihr nächsten, ersten Pose $x_{near}$ abhängig ist, so dass die Komponente einer von den Antriebskräften am Endeffektor bewirkten bzw. vermittelten Gesamtkraft in Richtung der Verbindung von der Differenz unabhängig ist.

Im hierzu komplementären Raum, im Ausführungsbeispiel also senkrecht zur (Richtung der) Verbindung, wirkt die Rückführkraft als nachgiebige Zwangsführung von der aktuellen Pose zur dieser nächsten der zulässigen Posen.

Durch den Term $N\cdot(M\cdot k_d\cdot \mathrm{d}q/\mathrm{d}t + c + g)$ wird die Dämpfung in den Nullraum dieser Zwangsführung projiziert, d.h. gegenüber dieser niedriger priorisiert, und bewirkt einen Dämpfungsanteil der Antriebskräfte, der von Geschwindigkeiten der Antriebe, im Ausführungsbeispiel linear, abhängig ist und diesen entgegenwirkt (vgl. $k_d\cdot \mathrm{d}q/\mathrm{d}t$).

Entsprechend umfasst das Verfahre im Ausführungsbeispiel die Schritte (vgl. Fig. 2):

S10:    Ermitteln der aktuellen Pose $x(t)$ des Endeffektors 12;

S20:    Ermitteln der dieser aktuellen Pose nächsten bzw. ersten Pose $x_{near}$;

S30:    Ermitteln der Differenz $\Delta = x_{near} - x(t)$;

S40:    Ermitteln der Rückstellkraft $f_c = k\cdot(\Delta)$ bzw. $f_c = k\cdot(\Delta) + D\cdot \mathrm{d}x/\mathrm{d}t$, in einer Ausführung in einem endeffektorfesten Referenzsystem;

S50:    Ermitteln der Jacobimatrix $J$ zwischen dem Achsraum und dem endeffektorfesten Referenzsystem, dessen z-Achse parallel zu der Verbindung ($x_{d,i+1} - x_{d,i}$) ist;

S60:    Ausblenden der entsprechenden Zeile(n) dieser Jacobimatrix $J$ und der aktuellen und ersten Pose, im obigen Beispiel der dritten bzw. z-Zeile;

S70:    Ermitteln der Rückstellkraft bzw. entsprechender Antriebskraft- bzw. -drehmomentanteile gemäß obigen Gleichungen; und

S80:    Ansteuern der Antriebe 11 zum Folgen einer auf den Roboter ausgeübten Handführkraft, beispielsweise unter Aufschalten der gemäß obigen Gleichungen ermittelten Antriebskräfte bzw. -drehmomente bzw. (zusätzlichen) Antriebskraft- bzw. -drehmomentanteile zu Antriebskraft- bzw. -drehmomentanteilen zum Folgen einer auf den Roboter ausgeübten Handführkraft, wobei die Handführung und die Rückstellkraft und/ oder von Geschwindigkeiten der Antriebe abhängig Dämpfung besonders vorteilhaft mittels Operational Space Control realisiert werden bzw. sein kann.

Obwohl in der vorhergehenden Beschreibung exemplarische Ausführungen erläutert wurden, sei darauf hingewiesen, dass eine Vielzahl von Abwandlungen möglich ist.

So wurde bereits darauf hingewiesen, dass anstelle dreidimensionaler Positionen auch zum Beispiel zweidimensionale Positionen vorgegeben werden bzw. sein können.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

Bezugszeichenliste

| | |
|---|---|
| 10 | Roboter(arm) |
| 11 | Antrieb |
| 12 | Endeffektor (roboterfeste Referenz) |
| 20 | Robotersteuerung |
| $x(t)$ | aktuellen Pose |
| $x_{\mathrm{near}}$ | erste Pose |
| $x_{\mathrm{d,i-2}}$, $x_{\mathrm{d,i-1}}$, $x_{\mathrm{d,i}}$, $x_{\mathrm{d,i+1}}$, $x_{\mathrm{d,i+2}}$, | vorgegebene diskrete zulässige Pose |

**Patentansprüche**

1. Verfahren zum Bewegen einer roboterfesten Referenz, insbesondere eines Endeffektors (12), eines Roboters, insbesondere mehrachsigen Roboterarms (10), auf Basis einer Anzahl, insbesondere Abfolge, vorgegebener diskreter zulässiger Posen ($x_{\mathrm{d,1-2}}$, $x_{\mathrm{d,i-1}}$, $x_{\mathrm{d,i}}$, $x_{\mathrm{d,i+1}}$, $x_{\mathrm{d,i+2}}$) der Referenz, mit dem, insbesondere mehrfach wiederholten, Schritt (S80):

   - Ausüben von Antriebskräften auf den Roboter durch dessen Antriebe (11) zum Bewegen der Referenz zum Folgen einer auf den Roboter ausgeübten Handführkraft auf Basis einer Differenz zwischen einer aktuellen Pose ($x(t)$) der Referenz und einer ihr nächsten, ersten Pose ($x_{\mathrm{near}}$) der zulässigen Posen derart, dass die Antriebskräfte bei einer Abweichung zwischen der aktuellen Pose und der ersten Pose eine von der Differenz abhängige Rückführkraft auf die Referenz bewirken,

   wobei
   die Rückführkraft einer von der Differenz abhängigen Rückstellkraft von der aktuellen Pose zu der ersten Pose entspricht, deren Komponente in Richtung einer Verbindung zwischen der ersten Pose und einer ihr benachbarten zweiten Pose der zulässigen Posen ausgeblendet ist, so dass die Komponente einer von den Antriebskräften an der Referenz bewirkten Gesamtkraft in Richtung der Verbindung von der Differenz unabhängig ist, **dadurch gekennzeichnet, dass** die Antriebe mittels Operational Space Control gesteuert werden, wobei die Rückstellkraft $f_c$ zusammen mit einer Dampfungskraft im Rahmen einer Operational Space Control auf entsprechende Antriebskräfte bzw. Antriebskraftanteile gemäß

$$T_c = J^T(\Lambda(x)\cdot f_c + \mu(x, dx/dt) + p(x)) + N\cdot(M\cdot k_d \cdot dq/dt + c + g)$$

   abgebildet wird,

   wobei $q$ Koordinaten bzw. (Winkel)Stellungen der Roboterdrehachsen bezeichnet,
   $M$ die Massenmatrix im Achsraum ist, $c$ geschwindigkeits- und gegebenenfalls stellungsabhängige Kräfte sind, $g$ rein stellungsabhängige Kräfte sind, $k_d \leq 0$ der Dampfung ist, $N = 1 - J^T\cdot(J^\#)^T$ der Nullraumprojektor ist, $\Lambda = (J\cdot M^{-1}\cdot J^T)^{-1}$ die Massenmatrix im Operational Space ist, $\mu = (J^\#)^T\cdot c - \Lambda\cdot dJ/dt\cdot dq/dt$ und $p = (J^\#)^T\cdot g$, $J^\# = M^{-1}\cdot J^T\cdot\Lambda$, und $J$ die Jacobimatrix ist,
   wobei die Ausblendung der Komponente in Richtung der Verbindung zwischen der ersten Pose und der ihr benachbarten zweiten Pose durch Nullbelegung bzw. Streichen der entsprechenden Zeilen der entsprechenden Jacobimatrizen bzw. Posen realisiert wird.

2. Verfahren nach Anspruch 1, **dadurch gekennzeichnet, dass** die Rückstellkraft von der Differenz, insbesondere linear, abhängig ist.

3. Verfahren nach einem der vorhergehenden Ansprüche, **dadurch gekennzeichnet, dass** die zulässigen Posen ein-, zwei- oder dreidimensional vorgegebene Positionen und/oder Orientierungen der Referenz aufweisen.

4. Verfahren nach einem der vorhergehenden Ansprüche, **dadurch gekennzeichnet, dass** die zulässigen Posen, insbesondere vorab, auf Basis einer erfassten Umgebung und/oder eines mathematischen Modells einer Umgebung und/oder mithilfe eines mathematischen Modells des Roboters und/oder, insbesondere durch eine Handführung des Roboters, mithilfe des Roboters vorgegeben sind.

5. System zum Bewegen einer roboterfesten Referenz, insbesondere eines Endeffektor (12), eines Roboters, insbesondere mehrachsigen Roboterarms (10), auf Basis einer Anzahl, insbesondere Abfolge, vorgegebener diskreter zulässiger Posen ($x_{d,i-2}$, $x_{d,i-1}$, $x_{d,i}$, $x_{d,i+1}$, $x_{d,i+2}$) der Referenz, das zur Durchführung eines Verfahrens nach einem der vorhergehenden Ansprüche eingerichtet ist und/oder aufweist:

   - Mittel zum Ausüben von Antriebskräften auf den Roboter durch dessen Antriebe (11) zum Bewegen der Referenz zum Folgen einer auf den Roboter ausgeübten Handführkraft auf Basis einer Differenz zwischen einer aktuellen Pose ($x(t)$) der Referenz und einer ihr nächsten, ersten Pose ($x_{near}$) der zulässigen Posen derart, dass die Antriebskräfte bei einer Abweichung zwischen der aktuellen Pose und der ersten Pose eine von der Differenz abhängige Rückführkraft auf die Referenz bewirken,

   wobei
   die Rückführkraft einer von der Differenz abhängigen Rückstellkraft von der aktuellen Pose zu der ersten Pose entspricht, deren Komponente in Richtung einer Verbindung zwischen der ersten Pose und einer ihr benachbarten zweiten Pose der zulässigen Posen ausgeblendet ist, so dass die Komponente einer von den Antriebskräften an der Referenz bewirkten Gesamtkraft in Richtung der Verbindung von der Differenz unabhängig ist, sowie Mittel zum Steuern, insbesondere Regeln, der Antriebe mittels Operational Space Control wie in Anspruch 1 präzisiert.

6. Computerprogrammprodukt mit einem Programmcode, der auf einem von einem Computer lesbaren Medium gespeichert ist, umfassend Befehle, die bei der Ausführung des Verfahrens durch das System von Anspruch 5 bewirken, dass das System von Anspruch 5 das Verfahren nach einem der Ansprüche 1 bis 4 durchführt.

**Claims**

1. Method for moving a reference, in particular an end effector (12), of a robot that is fixed to the robot, in particular a multiaxis robot arm (10), on the basis of a number, in particular sequence, of predefined discrete permissible poses ($x_{d,i-2}$, $x_{d,i-1}$, $x_{d,i}$, $x_{d,i+1}$, $x_{d,i+2}$) of the reference, having the, in particular multiply repeated, step (S80) of:

   - exerting drive forces on the robot by way of the drives (11) thereof to move the reference to follow a manual guidance force, exerted on the robot, on the basis of a difference between a current pose ($x(t)$) of the reference and a first pose ($x_{near}$), nearest thereto, from the permissible poses in such a way that the drive forces respond to a deviation between the current pose and the first pose by producing a return force on the reference that is dependent on the difference,

   wherein

   the return force corresponds to a restoring force from the current pose to the first pose that is dependent on the difference, the component of said restoring force in the direction of a connection between the first pose and a second pose, adjacent thereto, from the permissible poses being masked out, with the result that the component of a total force produced on the reference by the drive forces in the direction of the connection is independent of the difference, **characterized in that** the drives are controlled by means of operational space control, the restoring force $f_c$ together with a damping force being mapped during an operational space control to corresponding drive forces or drive force components according to

$$T_c = J^T(\Lambda(x) \cdot f_c + \mu(x, dx/dt) + p(x)) + N \cdot (M \cdot k_d \cdot dq/dt + c + g) \, ,$$

where q denotes coordinates or (angular) positions of the robot axes of rotation, M is the mass matrix in axis space, c are speed- and optionally position-dependent forces, g are purely position-dependent forces, $k_d \leq 0$ is the damping, $N = 1 - J^T \cdot (J^\#)^T$ is the null space projector, $\Lambda = (J \cdot M^{-1} \cdot J^T)^{-1}$ is the mass matrix in operational space, $\mu = (J^\#)^T \cdot c - \Lambda \cdot dJ/dt \cdot dq/dt$ and $p = (J^\#)^T \cdot g$, $J^\# = M^{-1} \cdot J^T \cdot \Lambda$, and J is the Jacobi matrix,

the masking-out of the component in the direction of the connection between the first pose and the adjacent second pose being implemented by way of zero assignment or deletion of the applicable rows of the applicable Jacobi matrices or poses.

2. Method according to Claim 1, **characterized in that** the restoring force is, in particular linearly, dependent on the difference.

3. Method according to either of the preceding claims, **characterized in that** the permissible poses comprise one-, two- or three-dimensionally predefined positions and/or orientations of the reference.

4. Method according to one of the preceding claims, **characterized in that** the permissible poses are predefined, in particular in advance, on the basis of captured surroundings and/or a mathematical model of surroundings and/or by means of a mathematical model of the robot and/or, in particular by way of manual guidance of the robot, by means of the robot.

5. System for moving a reference, in particular an end effector (12), of a robot that is fixed to the robot, in particular a multiaxis robot arm (10), on the basis of a number, in particular sequence, of predefined discrete permissible poses $(x_{d,i-2}, x_{d,i-1}, x_{d,i}, x_{d,i+1}, x_{d,i+2})$ of the reference, configured to carry out a method according to one of the preceding claims and/or comprising:

- means for exerting drive forces on the robot by way of the drives (11) thereof to move the reference to follow a manual guidance force, exerted on the robot, on the basis of a difference between a current pose $(x(t))$ of the reference and a first pose $(x_{near})$, nearest thereto, from the permissible poses in such a way that the drive forces respond to a deviation between the current pose and the first pose by producing a return force on the reference that is dependent on the difference,

wherein
the return force corresponds to a restoring force from the current pose to the first pose that is dependent on the difference, the component of said restoring force in the direction of a connection between the first pose and a second pose, adjacent thereto, from the permissible poses being masked out, with the result that the component of a total force produced on the reference by the drive forces in the direction of the connection is independent of the difference, and means for controlling, in particular regulating, the drives by means of operational space control as specified in Claim 1.

6. Computer program product having a program code stored on a computer-readable medium, comprising commands that, when the method is carried out by the system of Claim 5, cause the system of Claim 5 to carry out the method according to one of Claims 1 to 4.

**Revendications**

1. Procédé permettant de déplacer une référence fixée à un robot, en particulier un effecteur terminal (12), d'un robot, en particulier un bras de robot multiaxial (10), sur la base d'un nombre, en particulier d'une série de poses admissibles discrètes prédéfinies $(x_{d,i-2}, x_{d,i-1}, x_{d,i}, x_{d,i+1}, x_{d,i+2})$ de la référence, comprenant l'étape (S80), en particulier répétée à plusieurs reprises, consistant à :

- exercer des forces d'entraînement sur le robot par les dispositifs d'entraînement (11) de celui-ci pour déplacer la référence afin de suivre une force de guidage manuel exercée sur le robot sur la base d'une différence entre la pose actuelle $(x(t))$ de la référence et une première pose $(x_{near})$ qui est la plus proche de celle-ci parmi les poses admissibles de telle sorte que les forces d'entraînement provoquent sur la référence en cas d'écart entre la pose actuelle et la première pose une force de retour dépendant de la différence, dans lequel la force de retour correspond à une force de rappel, dépendant de la différence, de la pose actuelle à la première pose dont la composante en direction d'une liaison entre la première pose et une deuxième pose voisine de celle-ci parmi les poses admissibles est masquée de sorte que la composante d'une force totale provoquée par les forces d'entraînement au niveau de la référence est indépendante de la différence en direction de la liaison,

**caractérisé en ce que** les dispositifs d'entraînement sont commandés au moyen d'une commande d'espace opérationnel, dans lequel la force de rappel $f_c$ est mappée conjointement avec une force d'amortissement dans le cadre d'une commande d'espace opérationnel sur des forces d'entraînement ou des fractions de force d'entraînement correspondantes selon

$$T_C = J^T(\Lambda(x).f_c + \mu(x, dx/dt) + p(x))$$
$$+ N.(M._{kd \cdot d}q/dt + c + g),$$

où q désigne des coordonnées ou des positions (angulaires) des axes de rotation du robot, M est la matrice en masse dans l'espace axial, c sont des forces dépendant de la vitesse et le cas échéant de la position, g sont des forces uniquement dépendant de la position, $k_d \leq 0$ est l'amortissement, $N = 1-J^{T} \cdot (J^\#)^{T}$ est le projecteur d'espace nul, $\Lambda = (J.M^{-1}.J^T)^{-1}$ est la matrice de masse dans l'espace opérationnel, $\mu = (J^\#)^T.c - \Lambda.dJ/dt \cdot dq/dt$, et $p = (J^\#)^T.g$, $J^\# = M^{-1}.J^T.\Lambda$, et J est la matrice de Jacobi, dans lequel le masquage de la composante en direction de la liaison entre la première pose et la deuxième pose voisine de celle-ci est réalisé par un remplissage avec des zéros ou une suppression des lignes correspondantes des matrices de Jacobi correspondantes ou des poses.

2.  Procédé selon la revendication 1, **caractérisé en ce que** la force de rappel dépend de la différence, en particulier de manière linéaire.

3.  Procédé selon l'une quelconque des revendications précédentes, **caractérisé en ce que** les poses admissibles présentent des positions et/ou orientations de la référence prédéfinies en une, deux ou trois dimensions.

4.  Procédé selon l'une quelconque des revendications précédentes, **caractérisé en ce que** les poses admissibles sont prédéfinies à l'aide du robot, en particulier à l'avance, sur la base d'un environnement détecté et/ou d'un modèle mathématique d'un environnement et/ou à l'aide d'un modèle mathématique du robot et/ou en particulier par un guidage manuel du robot.

5.  Système permettant de déplacer une référence fixée à un robot, en particulier un effecteur terminal (12), d'un robot, en particulier un bras de robot multiaxial (10), sur la base d'un nombre, en particulier d'une série de poses admissibles discrètes prédéfinies ($x_{d,i-2}$, $x_{d,i-1}$, $x_{d,i}$, $x_{d,i+1}$, $x_{d,i+2}$) de la référence, qui est conçu pour exécuter un procédé selon l'une quelconque des revendications précédentes, et/ou qui présente :

    - des moyens pour exercer des forces d'entraînement sur le robot par les dispositifs d'entraînement (11) de celui-ci pour déplacer la référence afin de suivre une force de guidage manuel exercée sur le robot sur la base d'une différence entre une pose actuelle ($x(t)$) de la référence et une première pose ($x_{near}$), qui est la plus proche de celle-ci, parmi les poses admissibles, de telle sorte que les forces d'entraînement provoquent sur la référence en cas d'écart entre la pose actuelle et la première pose une force de retour dépendant de la différence, dans lequel

    la force de retour correspond à une force de rappel, dépendant de la différence, de la pose actuelle à la première pose dont la composante en direction d'une liaison entre la première pose et une deuxième pose voisine de celle-ci parmi les poses admissibles est masquée de sorte que la composante d'une force totale provoquée par les forces d'entraînement au niveau de la référence est indépendante de la différence en direction de la liaison, ainsi que des moyens pour commander, en particulier réguler, les dispositifs d'entraînement au moyen d'une commande d'espace opérationnel comme évoqué à la revendication 1.

6.  Produit de programme informatique, comprenant du code programme qui est stocké sur un support lisible par ordinateur, comprenant des instructions qui, lorsque le procédé est exécuté par le système selon la revendication 5, font que le système selon la revendication 5 exécute le procédé selon l'une quelconque des revendications 1 à 4.

Fig. 1

$x_{near} =$

$x_{d,i-2}$    $x_{d,i-1}$    $x_{d,i}$    $x_{d,i+1}$    $x_{d,i+2}$

$x(t)$

$q_7$

12

11

$q_6$

11

11

$q_5$

$q_4$

11

11

$q_3$

$q_2$

11

11

$q_1$

20

10

Fig. 2

| S10 | → | S20 | → | S30 | → | S40 |

| S80 | ← | S70 | ← | S60 | ← | S50 |

**IN DER BESCHREIBUNG AUFGEFÜHRTE DOKUMENTE**

**In der Beschreibung aufgeführte Patentdokumente**

- DE 102015118918 B3
- DE 102018207919 B3
- EP 3352951 A1
- DE 102018207921 B3

**In der Beschreibung aufgeführte Nicht-Patentliteratur**

- A Unified Approach for Motion and Force Control of Robot Manipulators: The Operational Space Control Formulation. **O. KHATIB.** Journal on Robotics and Automation. IEEE, Februar 1987, vol. RA-3, 43-53